Europäisches Patentamt

European Patent Office

Office européen des brevets

(11) Publication number: **0 322 909**
**A2**

# (12) EUROPEAN PATENT APPLICATION

(21) Application number: **88121841.6**

(22) Date of filing: **29.12.88**

(51) Int. Cl.⁴: **H04N 5/782**

(30) Priority: **29.12.87 JP 334802/87**

(43) Date of publication of application:
**05.07.89 Bulletin 89/27**

(84) Designated Contracting States:
**DE FR GB**

(71) Applicant: **HITACHI, LTD.**
**6, Kanda Surugadai 4-chome**
**Chiyoda-ku Tokyo 101(JP)**

(72) Inventor: **Yamada Yoshio c/o Nissin Ryou**
**1489-1 Tabiko Aza**
**Ikatsuchi, Katsuta-shi, Ibaraki-ken(JP)**
Inventor: **Ohno Shoji**
**3600-308 Nakane**
**Katsuta-shi, Ibaraki-ken(JP)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Galileiplatz 1**
**Postfach 86 06 20**
**D-8000 München 86(DE)**

(54) **Video tape recorder.**

(57) In a video tape recorder in which an operation
and a condition thereof are set by operating opera-
tion keys provided in an operation means (17), data
obtained by a sequential operation of predetermined
keys of the operation means subsequent to an input
operation of specific data by an operation of a function conversion key (18l) of the operation means are
converted into character data and character signals
representative of a series of characters from the
sequential character data are formed, which are sup-
plied to a display device and to a recording system
of a magnetic video tape by a recording instruction
operation of the operation means, whereby the char-
acter signal is recordable in an arbitrary position of
the magnetic video tape.

*FIG. 1*

# VIDEO TAPE RECORDER

## BACKGROUND OF THE INVENTION

The present invention relates to a video tape recorder in which operations such as operation mode setting and/or reservation of broadcasting programs are possible by means of operation means such as remote control device.

In a video tape recorder (referred to as VTR hereinafter), a remote control device is usually provided by which an on-off operation of a power source of the VTR, a setting of operation mode thereof, channel selection and broadcasting program reservation, etc., can be performed, conveniently.

On the other hand, a technique by which other functions than those mentioned above are made possible by means of the same remote control device has been proposed and an example thereof is disclosed in U.S. Patent No. 4,519,003. In this prior art, an operation manual of a VTR is stored in a memory device of the VTR and the operation manual is readout by operating the remote control device and displayed, so that an operator is enabled to receive an instruction of proper operation therefrom, to store, in the memory device, a list of information contents recorded on a magnetic video tape by means of the remote control device, to readout the list on demand and display or record it on the magnetic tape and to display a result of operation checks of various portions of VTR conducted according to instructions from the remote control device.

On the other hand, a number of informations can be recorded on a magnetic video tape which is usually very long. For example, there may be a case where a plurality of television programs are to be recorded continuously on a single magnetic video tape or a case where a plurality of scenes are recorded at different times and/or different places, successively, on a single magnetitc tape. In either case, it is preferrable to record an image of a title and/or date (referred to as "title" hereinafter) indicative of a content of the recorded program or scene (referred to as "program" hereinafter) every start time thereof for future reproductions.

In the prior art mentioned above, such recording of title of each program has not been considered at all, though it is described that it is possible to record such list of respective programs recorded on the same magnetic tape.

Further, in the case where the number of functions of a VTR is increased by a remote control device, it is necessary for the remote control device to have an operation key for each function, so that the number of operation keys to be equipped by the remote control device is increased undesirably, making the remote control device bulky and a use thereof inconvenient.

## SUMMARY OF THE INVENTION

An object of the present invention is to eliminate such problem of increased number of operation keys on the side of operation means such as remote control device when the number of functions thereof is increased and to provide a video tape recorder capable of recording a series of characters constituting a title on an arbitrary location of a magnetic tape without increasing the number of operation keys thereof.

In order to achieve the above object, according to the present invention, operation means comprises first means for converting data inputted sequentially by a sequence of operations of predetermined keys of the operation means into character data, according to an input operation of specific data by an operation of function conversion keys of the operation means, second means for forming character signals representing a series of characters from the sequential character data formed by the first means and third means for supplying the character signals to a display device and for supplying them to a recording system for a magnetic tape by a recording instruction operation of the operation means.

In the operation means, the operation keys used for operating a VTR itself function as input keys for character data when associated with operations of specific keys by means of the first means. Therefore, there is no need of providing keys for character data input separately.

Character signal formed by the second means is recorded on the magnetic tape according to a recording instruction from the operation means. In this case, the formation of a series of characters can be performed regardless of winding condition of the magnetic tape on a reel. Therefore, it is possible to record a desired character series on a desired location of the magnetic tape, enabling recordation of title of each program. The character signal is also supplied to a display device so that it is possible to recognize the character series prior to recordation on the magnetic tape.

## BRIEF DESCRIPTION OF THE DRAWING

Fig. 1 is a block diagram showing an embodiment of a video tape recorder according to the present invention;

Fig. 2 shows a whole construction of a system using the video tape recorder according to the present invention;

Fig. 3 illustrates examples of operation keys of a remote control device used in the video tape recorder according to the present invention;

Fig. 4 is a block diagram showing a concrete example of a microprocessor and a character inserter in Fig. 1;

Figs. 5A, 5B and 5C show examples of a menu, a title making and a title menu menu, respectively; and

Figs. 6A to 6D are flow-charts showing an operation of the present system.

## DETAILED DESCRIPTION OF THE PREFERRED EMBODIMENT

An embodiment of the present invention will be described with reference to the drawing.

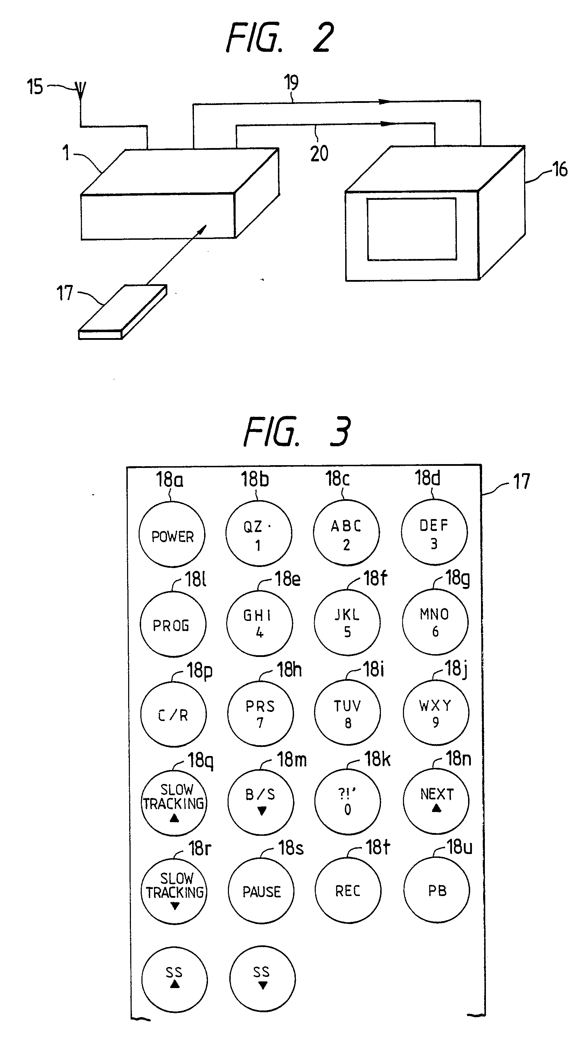

First, a system utilizing a VTR according to the present invention will be described with reference to Fig. 2.

In the same figure, the VTR 1 is operated by a remote control device 17 or an operation portion (not shown) provided on a front face of the VTR 1. In a record mode, a television broadcasting signal of a desired channel which is received by an antenna 15 is recorded by the VTR 1 on a magnetic tape thereof and, simultaneously, supplied through a signal path 19 or 20 to a television receiver 16 for monitoring. In the signal path 19, the television broadcasting signal is high-frequency-modulated. In the signal path 20, it is divided into a video signal and an audio signal. When a reproduction mode is set, the television broadcasting signal is reproduced from the magnetic tape of the VTR 1 and the reproduced signal is supplied through the signal path 19 or 20 to the television receiver 16. In other modes than record mode and reproduction mode, the television broadcasting signal received by the antenna 15 passes through the VTR 1 to the television recorder 16.

The remote control device 17 has a function of producing character series for title in addition to the operation functions of the VTR 1 including on-off operation of its own power source, receiving channel selection, broadcasting program reservation and setting of respective modes. The character series producing function is to display on the television receiver 16 a title and/or to record it at any location of the magnetic tape of the VTR.

Next, a concrete example of the remote control device 17 will be described with reference to Fig.

3. In Fig. 3, reference numerals 18a to 18u depict operation keys which are main operation keys.

The operation key 18a is used to on-off control of the power source of the VTR 1. The operation keys 18b to 18k are numeral keys used to set channel number, time, day, month and year for program reservations in the VTR 1 and can be sed to perform a further function of character data input when associated with an operation of the function key "PROG" 18l.

The operation keys 18m and 18n are channel shift keys used to change the receiving channel. That is, when the key 18m is operated, a receiving channel is changed from, for example, channel No. 4 toward, for example, channel No. 12 and when the key 18n is operated, the channel is changed from No. 4 toward No. 1.

When the channel shift key 18n is actuated subsequent to an operation of the function key 18l, a character signal formed from the character data inputted in the VTR 1 is registered in a memory thereof and a cursor on a screen of the television receiver 16 is shifted by one character. The shift key 18m is also used to reset/clear a counter in the VTR 1.

The operation key 18p is for start of new character line on the screen. The operation keys 18q and 18r are for tracking regulations during a slow speed reproduction, originally. However, when associated with an operation of the function keys 18l, the operation key 18q functions to change the size of character to be displayed by operations of the operation keys 18b to 18k and the operation key 18r functions to change a background color when operated. The operation keys 18t, 18u and 18s are for recording, reproducing and pause, respectively.

Data produced by operating the operation keys 18b to 18k, 18n, 18q and 18r, etc., are fixed, respectively, regardless of whether the operation is before or after an operation of the function key 18l. These data are converted by a microprocessror in the VTR 1 into different data depending upon whether the function key 18l is operated. For example, when the operation key 18b is operated while the function key 18l is not, data resulting from the operation of the operation key 18b is used in the VTR 1 as data concerning television program reservation and/or time setting. However, when the operation key 18b is operated subsequent to an operation of the function key 18l for title formation, the data obtained by the operation of the operation key 18b becomes character data in the VTR 1.

When the operation keys 18b to 18k are operated after the function key 18l is operated, character data formed thereby are dependent upon the number of operations of each of the operation keys 18b to 18k. For example, the operation key 18b can be used to input four characters "1", "Q", "Z" and ".". That is, when the operation key 18b is operated once after the function key 18l is operated, the character "1" is inputted, twice, the character "Q", three times, the character "Z" and four times, the period ".". With one more operation of the key 18b, th character "1" is inputted again. Thus, the character to be inputted is changed sequentially every time the operation key 18b is operated. By operating the operation key 18n after an input operation of a desired character, the desired character is registered in the memory in the VTR 1 and an input operation of a next character becomes possible.

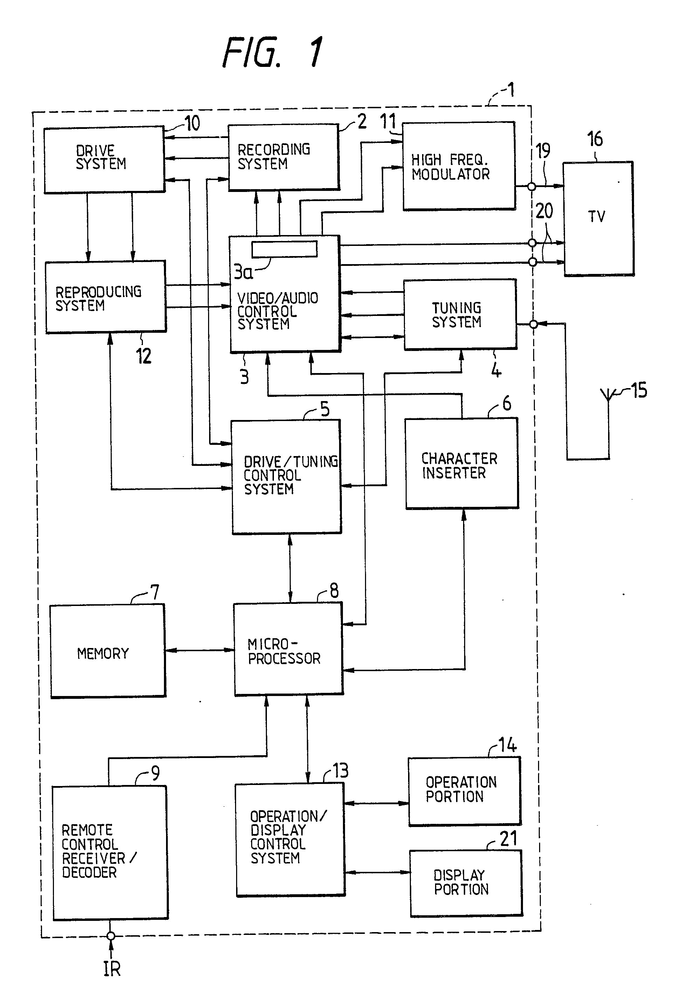

An embodiment of the video tape recorder according to the present invention will be described next with reference to Fig. 1. In Fig. 1, a reference numeral 2 is a recording system, 3 a video/audio control system, 3a an image memory, 4 a tuning system, 5 a drive/tuning control system, 6 a character inserter, 7 a memory device, 8 a microprocessor, 9 a remote control receiver/decorder, 10 a drive system, 11 a high frequency modulator, 12 a reproducing system, 13 an operation portion/display portion control system, 14 an operation portion, 21 a display portion, other reference numerals which are same as those used in Fig. 2 being attached to corresponding portions, respectively.

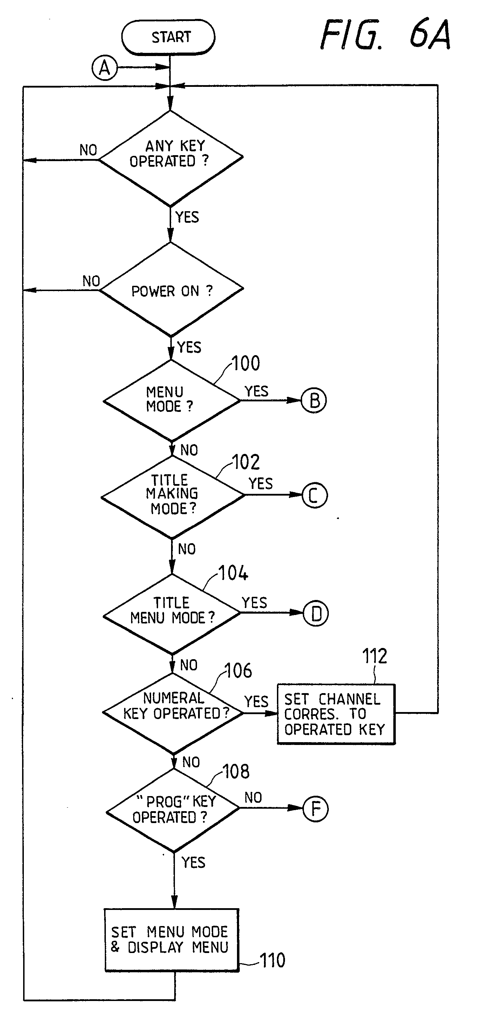

In Fig. 1, the memory device 7 comprises an EAROM and a ROM of the microprocessor 8 stores programs for operation of the VTR, various other programs for other functions such as title formation and a set of character codes corresponding to character lines of a menue display for selection of one of these programs, which will be describedin detail later with reference to Figs. 6A to 6D.

The selection of one of functions other than VTR operation is performed by the remote control device 17 (Figs. 2,3). When such function is not selected, the microprocessor 8 operates according to the program for VTR operation and various operations of the VTR 1 can be done by performing operations in the remote control device 17 or the operation portion 14.

First, a case will be described where the microprocessor 8 operates according to the program for operation of the VTR.

When a desired television channel is assigned by operating the operation portion 14, the operation button/display control system 13 specifies an operation button (not shown) operated in the operation portion 14 and sends the specified data to the microprocessor 8. The microprocessor 8 processes this data according to the program and sends an instruction instructing a reception of the assigned channel to the drive/tuning control system 5 and a control signal to the video/audio control system 3.

The drive/tuning control system 5 controls the tuning system 4 according to the instruction to enable a reception of the assigned channel. Upon this, a television broadcasting signal of the assigned channel received by the antenna 15 is selected in the tuning system 4, which is separated into a video signal and an audio signl, etc., and sent to the video/audio control system 3. The video/audio control system 3 is composed of an image memory 3a and switches, statuses of which are set according to the control signal from the microprocessor 8 such that the video signal and the audio signal are supplied separately through signal passages 20 or together after mixed and modulated in the high frequency modulator 11 through a signal passage 19 to the television receiver 16.

In this manner, it becomes possible to monitor the receiving channel in the side of the television receiver 16, and, simultaneously, the receiving channel data is supplied from the microprocessor 8 through the operation/display control system 13 to the dsplay portion 21 on which the receiving channel number is displayed.

When the recording operation is selected in the operation portion 14, the microprocessor 8 sends a recording instruction to the drive/tuning control system 5 and a control signal to the video/audio control system 3, similarly. The drive/tuning control system 5 actuates the recording system 2 according to this recording instruction and controls the drive system 10 to set the latter to a condition for recording rotation of a magnetic head, loading of the magnetic tape and running thereof. The video/audio control system 3 sends the video signal and the audio signal from the tuning system 4 to the television receiver 16 and to the recording system 2. Upon this, the receiving channel is recorded on the magnetic tape while being monitored by the television receiver 16.

When a reproduction operation is selected in the operation portion 14, the reproduction system 12 is actuated similarly by the drive/tuning control system 5 and the drive system 10 operates to perform a reproduction. A reproduction signal of the drive system 10 is supplied by the video/audio control system 3 through the signal passage 19 or the passages 20 to the television receiver 16, after processed by the reproduction system 12.

As described, other VTR operations than those which are normal can be performed by the operations in the operation portion 14.

When a similar operation is performed by the remote control device 17, signals produced thereby are received by the remote control receiver/decoder 9 and data corresponding to the operated key is decoded and sent to the microprocessor 8. This data is identical to the data sent from the operation portion/display control system

4

13 to the microprocessor 8 when a key for assigning the same operation in the operation portion 14 is operated. Therefore, the VTR 1 is operated in a similar manner to that when it is operated by the operation portion 14.

To the display device 21, infomations such as operation mode of the VTR 1 and count amount of tape are also supplied from the microprocessor 8 which are displayed thereby.

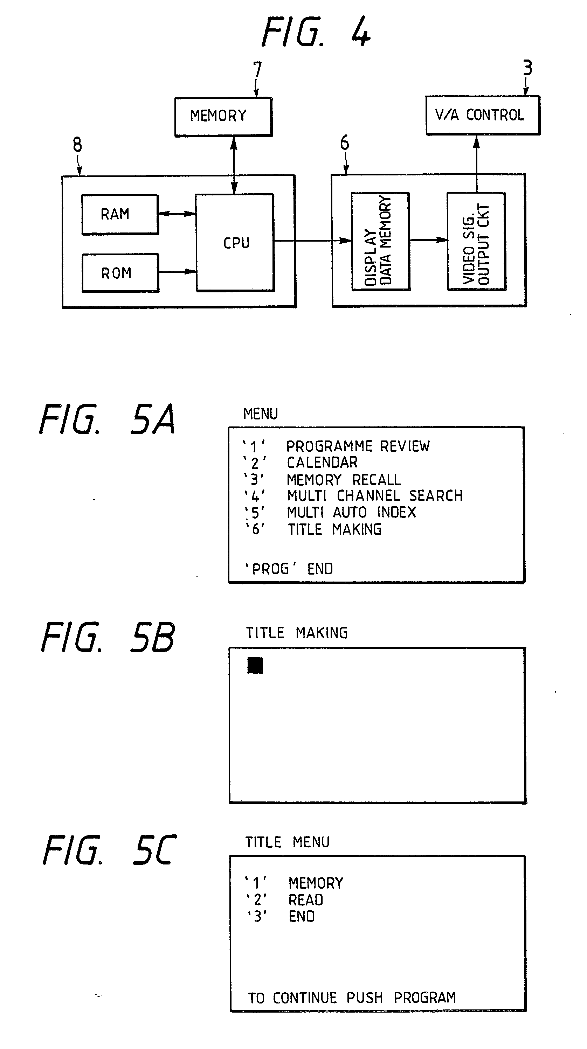

Before describing a title formation and recording operation of this embodiment, the microprocessor 8 and the character inserter 6 will be described with reference to Fig. 4.

As shown in Fig. 4, the microprocessor 8 includes a RAM and a ROM. The ROM stores sets of character codes for various programs and the menu display as mentioned previously and the RAM has a character code table region capable of storing character codes necessary to display characters corresponding in number to those which can be displayed, a region for storing character size data for determining the size of characters to be displayed and a region for storing background color data for determing background color, etc.

The memory 7 also has regions for the character code table, character size data and background color data.

The character inserter 6 includes a display data memory and a video signal output circuit. The display data memory has a region for storing a character code table capable of storing as many character codes necessary to display characters as can be displayed and regions for storing character size data and background color data. The video signal output circuit reads out character code and character size data from the display data memory to produce a character signal by which a character pattern corresponding to the character code and having a size determined by the character size data is displayed in a proper position on a screen of the television receiver 16 and, further, reads out the background color data from the data memory for display to produce an image signal (referred to as background color signal, hereinafter) indicative of a background color corresponding thereto.

The title formation will now be described.

When the function key 18l shown in Fig. 3 is operated, the microprocessor 8 receives a data thereby from the remote control receiver/decoder 9 and reads a menu data from the ROM and sends it to the character inserter 6. In the character inserter 6, the menu data is written in the display data memory and then readout therefrom. An image signal composed of a character signal indicative of the menu data and a specific background color signal is formed from the data readout in this manner. The microprocessor 8 controls the video/audio control system 3 to block the video signal and the audio signal from the tuning system 4 and the image memory 3a stores this image signal from the character inserter 6 which is read out repeatingly. The image signal readout reapartingly is supplied through the signal passage 19 or 20 to the television receiver 16. Thus, the menu such a shown in fig. 5A is displayed on the television receiver 16.

Assuming that the menu displayed includes the title formation in its item No. 6, the operation key 18g of the remote control device 17, which has a function of generating a numeral "6", is operated, upon which the microprocessor 8 reads the program of the title formation from the ROM and starts an operation for forming the title according to the program (i.e., title formation mode). In this title formation mode, the video/audio control system 3 blocks the video signal and audio signal from the tuning system 4. The RAM of the microprocessor 8 has stored the background color data representing a specific color (e.g., blue) and the character size data preliminarily and the microprocessor 8 sends the background color data to the character inserter 6 to produce one of background colors stored in the image memory 3a. Then, the repeated readout is performed in the image memory 3a, the repeatingly readout data being supplied through the signal passage 19 or 20 to the television receiver 16. In this manner, a cursor is displayed, together with the background color, blue, on the television receiver 16, as shown in Fig. 5B.

Thereafter, the operation keys 18b to 18k are operated to input a series of characters for formation of the title. When these operation keys are operated, the microprocessor 8 converts data from the remote control receiver/decoder 9 into character data according to the program and writes them in addresses of the character code table of the RAM which correspond to cursor positions on the screen of the television receiver 16, respectively.

At the same time, the microprocessor sends the character size data and the background color data to the character inserter 6. In the latter, addresses of the display data memory correspond to display positions of respective characters on the screen of the television receiver 16, respectively, and the address assignment is performed according to addresses from the microprocessor 8. The assigned addresses correspond to the display positions of the cursor on the screen of the television receiver 16.

The character data from the microprocessor 8 are written in addresses of the character code table of the display data memory, which are assigned by the microprocessor 8, and, further, the character size data and the background color data are also written in. Thereafter, the video signal output circuit reads out from the data memory for display the character size data and the background color data and from the character code table the character code to produce an image signal having mixed character signal and background color signal. This image signal is supplied to the video/audio control system 3 and stored in its image memory 3a. The image signal in the image emory 3a is readout repeatedly so that a character having a size assigned by the character size data is displayed in an assigned position of the cursor on the blue screen of the television receiver 16.

The display position of the character on the television receiver 16 is determined by addressing of the microprocessor with respect to the display data memory of the character inserter 6. The address assignment of the microprocessor 8 can be changed by an operation of the operation key 18n of the remote control device 17. Further, since the cursor is displayed in a position on the television receiver 16 correspondingly to the address of the display data memory of the character inserter 6 which is assigned by the microprocessor 8, the display position of the cursor can be changed by the operation of the operation key 18n and, therefore, by setting the position of the cursor suitably, the display position of the input character can be set, arbitrarily.

Data is outputted by the remote control device 17 every operation of the keys 18b to 18k and the microprocessor 8 provides a character data every reception of this data. When any one of the operation keys 18b to 18k is operated repeatedly, an identical data is supplied to the microprocessor 8, repeatingly. However, the microprocesor 8 produces and sends a different character data upon every identical data supplied. For example, when the operation key 18b is operated, the microprocessor 8 provides a character data of a character "1" according to the data received. Then, upon a second operation of the same operation key 18b, the microprocessor 8 provides a character data of a character "Q" although the data received from the remote control receiver/decoder 9 is the same as the preceding one. That is, upon the first operation of the operation key 18b, the character data of the character "1" is written in a predetermined position of the display data memory of the character inserter 6 and, upon the second operation of the same key, the character data of the character "1" in the same position is replaced by the character data of the character "Q".

In this manner, at every successive operation of the same key, the character data in the same position of the display data memory is changed. The data in the display data memory is readout once every write of the character data and the readout data are stored in the image memory 3a as an image signal for one frame. The repetitive readout of the image memory 3a is started immediately after the writing of the image signal. Upon this, the displayed character in the position on the television receiver 16 assigned by the cursor is hanged successively by the successive operations of the same operation key.

In this manner, each of the operation keys 18b to 18k are given a plurality of character input functions by the microprocessor 8 and thus it becomes possible to display necessary characters on the television receiver 16 by means of this change of character display.

When a necessary character is displayed in a position of the television receiver 16 as assigned by the cursor by the operation or operations of one of the operation keys 18b to 18k, the operation key 18n is then operated. Upon this, the microprocessor 8 assigns a next address of the display data memory of the character inserter 6. At the same time, the cursor on the television receiver 16 is shifted by an amount corresponding to one character and the preceding character data inputted thereto is fixed (i.e., registered) in the display data memory and it becomes ready for reception of an input of a next character. And, by operating one of the operation keys 18b to 18k, the next character input is performed similarly.

The title composed of serial characters is formed in this manner. A start of a new line of characters is performed by an operation of the operation key 18p, upon which it is possible to set the number of characters in one line arbitrarily. When there is an erroneous character in the title formed, the cursor on the television receiver 16 is moved to the position of the error character by operating the operation key 18m to assign the address of the display data memory of the character inserter 6 in which the erroneous character data is stored. Then, by operating a correct one of the operation keys 18b to 18k and the operation key 18n as mentioned above, a correction can be performed.

When the operation key 18q of the remote control 17 is operated after the function key 18l is operated, the size of character displayed is changed. That is, the microprocessor 8 produces character size data from data concerned to the operation key 18q and received thereby and replaces the character size data stored in the RAM by the new character size data. At the same time, the produced character size data is sent to the character inserter 6 in which it is used instead of the character size data stored in the display data memory. Upon successive operations of the operation key 18r, the size of character becomes larger and larger. This change of character size is circulated.

When the operation button 18r is operated after the operation key 18l is operated, a new background color data is set in the RAM of the microprocessor 8 and the display data memory of the character inserter 6, by which the background color signal from the character inserter 6 is replaced. Upon this, the background color displayed on the television receiver 16 is changed. This background color is also changed circulatingly.

Futher, by operating a certain operation key which is provided in the remote control device 17 originally after the operation key 18l is operated, it is possible to store the data stored in the display data memory of the character inserter 6 in the memory 7 and to write in a digital memory the data after readout from the memory 7. That is, when the operation button 18l is operated after the title is formed, the microprocessor 8 receives data caused by the operation key 18l and reads the menue data from the RAM and sends it to the character inserter 6. Upon this, the title menu such as shown in Fig. 5C is displayed on the screen of the television receiver 16. By operating the operation key 18b according to the title menu displayed, an item "1. MEMORY" of this title is assigned. The microprocessor 8 reads from the RAM a content of the character code table, the character size data and the background color data and stores them in the memory 7.

In a case where a title prepared previously and stored in the memory7 is to be readout and displayed, the title formation mode is selected first by operating the keys 18l and 18g and, then, the menu shown in Fig. 5C is displayed by operating the function key 18l again. And, by operating the operation key 18c, an item "2. READ" of the title is assigned. Upon this, the micro-processor 8 reads from the memory 7 the content of the character code table, the character size data and the background color data and writes them in the RAM and sends them to the character inserter 6. Upon this, the title stored in the memory 7 is displayed on the screen of the television receiver 16. In this case, correction of character or charatcters of the displayed title and change of the character size and/or the background color are possible by operating predetermined operation buttons of the remote control device 17 as mentioned previously.

When all of the titles produced were stored and the title making mode is to be terminated, the function key 18l is operated again. Upon this, the menu shown in Fig. 5C is displayed again. Then, by assigning an item "3. END" by operating the function key 18d, the title making mode is terminated and the VTR becomes a state in which usual mode setting is possible.

The title making thus described will be described in more detail with reference to Figs. 6A to 6D.

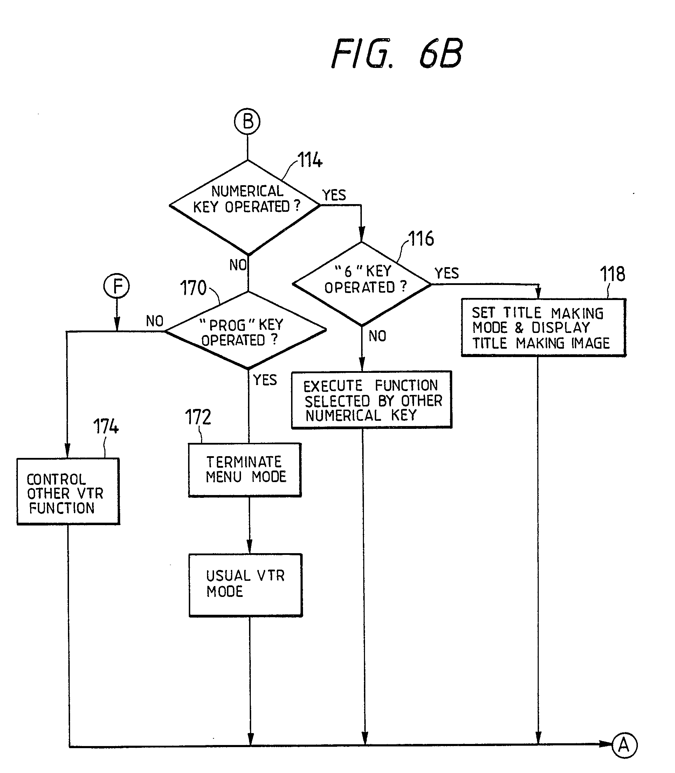

In Fig. 6A which shows a main routine of the present system, it is decided in the step 100 whether an operation to be done is the menu mode. If yes, the operation is performed along the subroutine shown in Fig. 6B.

In Fig. 6B, it is checked in the step 114 whether or not a numerical key is operated. If yes, then it is checked in the step 116 whether the "6" key 18g is operated to select the item "6" on the menu in Fig. 5A. If yes, the title making image such as shown in Fig. 5B is displayed in the step 118 and the operation is returned to the main routine to start the title making mode operation.

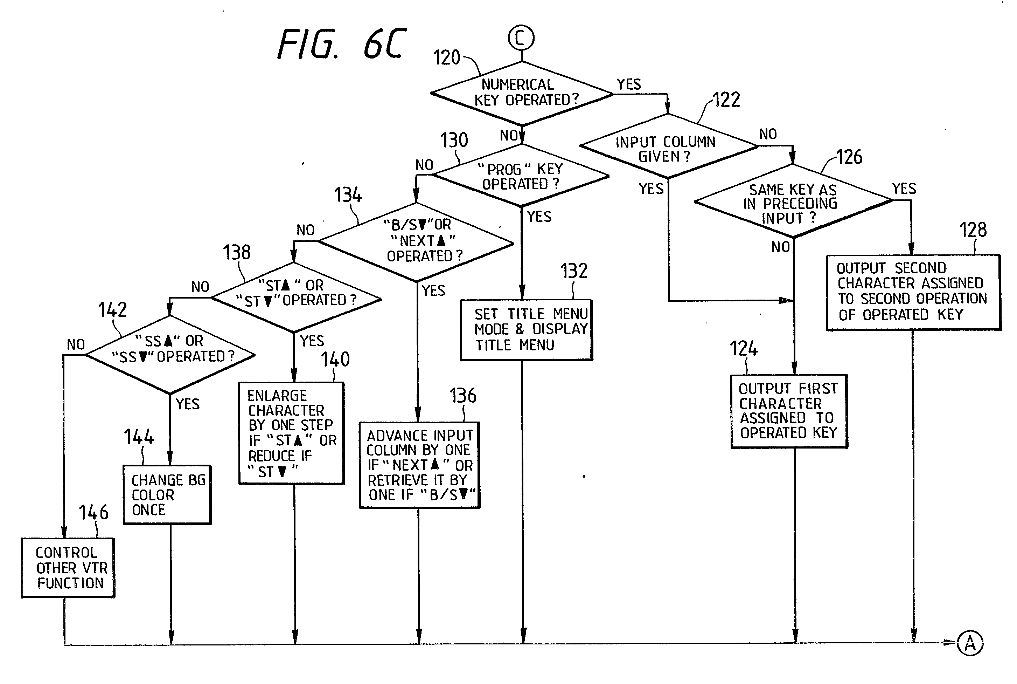

After the title making mode is selected in the step 118, the title making operation is performed along a subroutine shown in Fig. 6C. In Fig. 6C, after a numerial key is operated in the step 120 and an input column such as shown by the cursor in the title making image on the Fig. 5B is given in the step 122, a character corresponding to the operated numerical key is inputted in the step 124.

If, in the step 122, the input column is occupied by a precedingly inputted character, then, it is decided in the step 126 whether or not the operated key is the same key as that operated precedingly. If yes, a second character corresponding to a twice operation of the same key is inputted in the same column, in the step 128. This operation is repeated until a desired character is given in the given column. Then, the operation is returned to the main routine.

If the decision in the step 120 is negative, it is then checked in the step 130 whether or not the PROG key 18l is operated to display, in the step 132, a title menu such as shown in Fig. 5C. When the decision in the step 130 is negative, it is checked n the step 134 whether either the function key B/S 18m or the function key NEXT 18n is operated. If yes, the cursor is moved forwardly by one step when the B/S key 18m is operated or backwardly by one step when the NEXT key 18n is operated, in the step 136. Then, a similar character selection is performed for a new column, and so on. If no, it is checked in the step 138 whether or not the function key ST (Slow Tracking)▲ key 18q or ST ▼ key 18r is operated. if yes, the character displayed on the current column is enlarged by one step when the ST▲ key 18q is operated or reduced by one step when the ST ▼ key 18 r is operated. When the decision made in the step 138 is negative, it is checked, in the step 142, whether either the function SS▲ key or SS ▼ key is operated. If yes, the background color is changed by one step and, if no, other VTR function control is performed in the step 146. A required title is prepared in this manner. Then the operation is returned to the main routine.

7

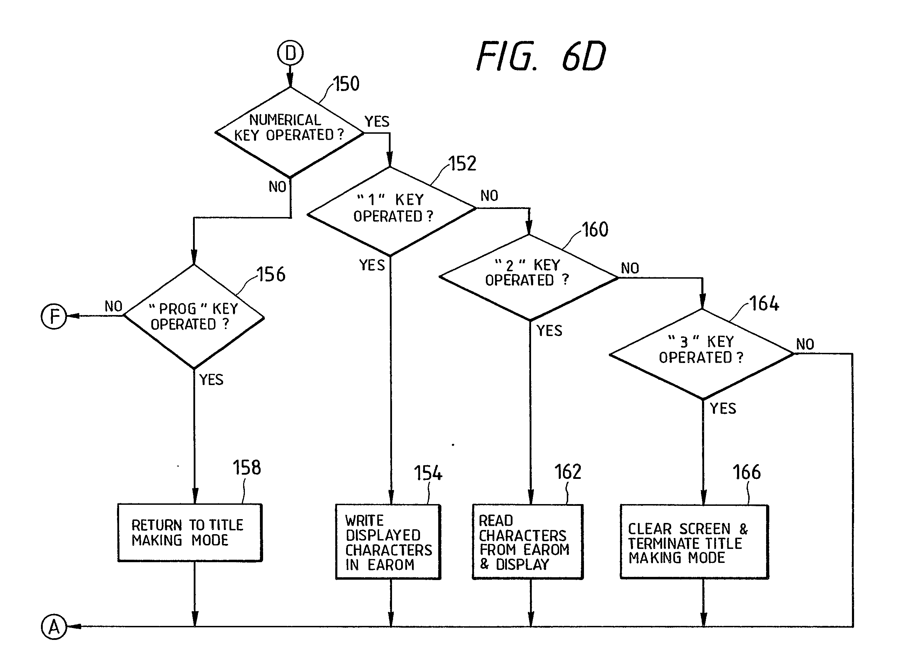

Fig. 6D is a flowchart for performing the title menu mode operation ordered in the step 132. In Fig. 6D, it is first checked in the step 150 whether or not a numerical key is operated. If yes, it is then checked in the step 152 whether the "1" key 18b is operated. If yes, the characters forming the title are written in the EAROM of the memory 7, in the step 154. If no, it is then checked in the step 160 whether or not te "2" key 18c is operated. If yes, the characters written in the EAROM are readout and displayed in the step 162. If no, it is then checked in the step 164 whether or not the "3" key 18d is operated. If yes, the display screen is cleared and the title making mode operation is terminated in the step 166.

When the decision made in the step 150 is negative, it is checked in the step 156 whether or not the PROG key 18l is operated. If yes, the operation is returned to the title making mode operation and, if no, other VTR function control is performed in the step 174. Then the operation is returned to the main routine.

Titles formed in this manner can be stored in the VTR1 so that they can be displayed on the television receiver 16 later, on demand.

When the operation buttons 18t and 18u are operated to assign a recording mode without removing the title formation mode after a title is formed and it is confirmed on the television receiver 16 by the operations mentioned above, the microprocessor 8 sends a recording instruction to the drive/tuning control system 5. The drive/tuning control system 5 actuates the recording system 2 and the drive system 10 and, when these are set to the recording mode, it is informed to the microprocessor 8. Upon this, the microprocessor 8 sends a control signal to the video/audio control system 3 to supply the image signal of the title readout repeatedly from the image memory 3a to the drive system 10 through the recording system 2. Upon this, the title is recorded on the magnetic tape.

When a release operation for terminating the recording mode is performed by the remote control device 17, the microprocessor 8 sends a control signal to the video/audio control system 3 to stop a supply of the image signal from the image memory 3a to the recording system 2, sends a recording stop instruction to the drive/tuning control system 5 to control the drive system 10 and the recording system 2 to stop the recording. When this recording release operation is a pause operation, it is possible to made the VTR 1 to a stop mode by operating a stop button (not shown) or re-start the title recording by releasing the pause by means of the operation button 18s. From this, it is possible to record the title in an arbitrary position of the magnetic tape and then record necessary programs by operating the magnetic tape prior to the recordation of the title.

When the counter in the VTR 1 is reset to "0" by the operation button 18m, the magnetic tape is rewound to a predetermined position and the title recordation is started at this position, the title is recorded on an area of the magnetic tape from this position to a position at which the counter content becomes "0" because the counter measures an amount of tape being rewound. In this case, it is possible to recrd a title for a desired time period in a top portion of each program on the magnetic tape having programs recorded thereon. That is, it is enough to start the title recording after an end of title recording period is determined by reproducing the program and rewinding the magnetic tape subsequent to a resetting of the counter.

In order to perform the ordinary operation of the VTR 1 (recording of a receiving channel or reproducing from the magnetic tape) after the title is formed and recorded on the magnetic tape or after the title formed is recorded in the memory 7, the title making mode is terminated. In order to do this, the operation button 18ll is operated during the title making mode to display the menue shown in Fig. 5 and the operation button 18d is operated to assign an item "3. END". Upon this, the title formation mode is released.

The title may be formed every time when a recording thereof is to be performed or formed preliminarily. When the title is to be formed every recording time of program, the title is formed preliminarily and stored in the memory 7 and is recorded by the operations of the operation buttons 18t and 18u. Then, after the title formation mode is released, the program recording is started at a commemcement thereof. In the case where a title is formed and recorded for each of programs recorded on the magnetic tape, a top portion of a desired program is detcted after the title is formed or vice versa, then a title recording region for the title is set by using the counter in the VTR 1 and thereafter the operation buttons 18t and 18u are operated. Upon this, it is possible to record the title at the top portion of the program. When a reproduction mode is set by the operation button 18u during the title formation mode, the video/audio control system 3 stops to read a title image signal in the image memory 3a and supplies a reproduction video signal from the reproducing system 12 to the television receiver 16, during the reproduction mode. Upon this, it becomes possible to search a program on the magnetic tape to which the title is to be attached or detect a top portion of the program by holding the reproduction mode after the title is formed.

Futher, it is also possible to record titles in top portions of respective television programs by forming all of the titles and storing them in the memory 7, reading necessary titles from the memory 7 and storing them in the image memory 3a while confirming the top portions of the television programs on the magnetic tape on the television receiver 16.

As the image memory 3a, it is possible to use a field (or frame) memory which is used commonly for picture-in-picture, image reduction, image expansion and/or time axis conversion. Further, the image memory 3a may be omitted. In such case, the microprocessor 8 assigns addresses of a digital memory of the character inserter 6, sequentially, to readout the digital memory repeatingly and image signals produced thereby are supplied to the television receiver 16 and/or the recording system 2. In this digital memory, however, an address corresponding to a display position of the cursor on the television receiver 16 becomes a write mode only when a character is inputted from the remote control device 17.

As described hereinbefore, according to the present invention, superior effects are obtained that the character input necessary for title formation etc., becomes possible by the operation means without increasing the number of operation buttons, for which the operation means can perform multifunctions without increasing the size and/or cost thereof and formed character series can be recorded in intended positions on a magnetic tape.

## Claims

1. A video tape recorder system in which an operation and a condition thereof are set by operating operation keys proided in an operation means (17), comprising first means (8) for converting data obtained by a sequential operation of predetermined buttons of said operation means into character data in response to an input operation of specific data by an operation of a function conversion key (18l) of said operation means, second means for forming character signals representative of a series of characters from the sequential character data formed by said first means and third means for supplying said character signals to a display device and for supplying them to a recording system of a magnetic tape by a recording instruction operation of said operation means, whereby said character signal is recordable in an arbitrary position of said magnetic tape.

2. The system as claimed in claim 1, wherein said second means provides a mixture signal of a background signal representative of predetermined color and said character signal and wherein a background color on a display screen due to said background signal is variable.

3. The system as claimed in claim 1 or 2, wherein a size of a display character according to said character signal formed by said second means is variable.

3. The system as claimed in any of claims 1 to 3, further comprising memory means for storing readably at an arbitrary time said character data formed by said first means.

5. The sytem as claimed in any of claims 1 to 4, further comprising a remote control uni having operation keys each having a usual function as well as character input function of one or a plurality of characters and a character image control operation function and means responsive to the data from said operation keys for judging whether said operation key has the usual operation function or the functions of character input and character image control operation function.

# FIG. 1

Block diagram showing interconnections between: DRIVE SYSTEM (10), RECORDING SYSTEM (2), HIGH FREQ. MODULATOR (11), TV (16), REPRODUCING SYSTEM (12), VIDEO/AUDIO CONTROL SYSTEM (3, 3a), TUNING SYSTEM (4), DRIVE/TUNING CONTROL SYSTEM (5), CHARACTER INSERTER (6), MEMORY (7), MICRO-PROCESSOR (8), REMOTE CONTROL RECEIVER / DECODER (9), OPERATION/DISPLAY CONTROL SYSTEM (13), OPERATION PORTION (14), DISPLAY PORTION (21). Connections labeled 1, 15, 19, 20, and IR.

# FIG. 2

15

1

19

20

16

17

# FIG. 3

| 18a POWER | 18b QZ· 1 | 18c ABC 2 | 18d DEF 3 | 17 |
| 18l PROG | 18e GHI 4 | 18f JKL 5 | 18g MNO 6 | |
| 18p C/R | 18h PRS 7 | 18i TUV 8 | 18j WXY 9 | |
| 18q SLOW TRACKING ▲ | 18m B/S ▼ | 18k ?!' 0 | 18n NEXT ▲ | |
| 18r SLOW TRACKING ▼ | 18s PAUSE | 18t REC | 18u PB | |
| SS ▲ | SS ▼ | | | |

# FIG. 4

7

MEMORY

3

V/A CONTROL

8

RAM

ROM

CPU

6

DISPLAY DATA MEMORY

VIDEO SIG. OUTPUT CKT

## FIG. 5A

MENU

'1' PROGRAMME REVIEW
'2' CALENDAR
'3' MEMORY RECALL
'4' MULTI CHANNEL SEARCH
'5' MULTI AUTO INDEX
'6' TITLE MAKING

'PROG' END

## FIG. 5B

TITLE MAKING

■

## FIG. 5C

TITLE MENU

'1' MEMORY
'2' READ
'3' END

TO CONTINUE PUSH PROGRAM

*FIG. 6A*

START

Ⓐ

ANY KEY OPERATED ? — NO

YES

POWER ON ? — NO

YES

100 MENU MODE ? — YES → Ⓑ

NO

102 TITLE MAKING MODE ? — YES → Ⓒ

NO

104 TITLE MENU MODE ? — YES → Ⓓ

NO

106 NUMERAL KEY OPERATED ? — YES → 112 SET CHANNEL CORRES. TO OPERATED KEY

NO

108 "PROG" KEY OPERATED ? — NO → Ⓕ

YES

SET MENU MODE & DISPLAY MENU — 110

# FIG. 6B

# FIG. 6C

C

120 NUMERICAL KEY OPERATED? — YES → 122 INPUT COLUMN GIVEN? — NO → 126 SAME KEY AS IN PRECEDING INPUT? — YES → 128 OUTPUT SECOND CHARACTER ASSIGNED TO SECOND OPERATION OF OPERATED KEY

126 SAME KEY AS IN PRECEDING INPUT? — NO → 124 OUTPUT FIRST CHARACTER ASSIGNED TO OPERATED KEY

122 INPUT COLUMN GIVEN? — YES

120 NUMERICAL KEY OPERATED? — NO → 130 "PROG" KEY OPERATED? — YES → 132 SET TITLE MENU MODE & DISPLAY TITLE MENU

130 "PROG" KEY OPERATED? — NO → 134 "B/S▼"OR "NEXT▲" OPERATED? — YES → 136 ADVANCE INPUT COLUMN BY ONE IF "NEXT▲" OR RETRIEVE IT BY ONE IF "B/S▼"

134 "B/S▼"OR "NEXT▲" OPERATED? — NO → 138 "ST▲" OR "ST▼"OPERATED? — YES → 140 ENLARGE CHARACTER BY ONE STEP IF "ST▲" OR REDUCE IF "ST▼"

138 "ST▲" OR "ST▼"OPERATED? — NO → 142 "SS▲" OR "SS▼"OPERATED? — YES → 144 CHANGE BG COLOR ONCE

142 "SS▲" OR "SS▼"OPERATED? — NO → 146 CONTROL OTHER VTR FUNCTION

A

# FIG. 6D

EP 0 322 909 A2